# EUROPEAN PATENT APPLICATION

(11) **EP 4 378 966 A1**
(43) Date of publication of application: **05.06.2024**
(21) Application number: 21944800.8
(22) Date of filing: 28.09.2021
(51) Int. Cl.: C08F 14/18, C08F 2/24, C08G 65/332

(54) **POLYETHER DIACID OR POLYETHER DIACID SALT SURFACTANT, AND USE THEREOF**

(30) Priority: 11.06.2021 CN 202110653981
(71) Applicant: Zhonghao Chenguang Research Institute of Chemical Industry Company Limited, Fushun Country Zigong, Sichuan 643201 (CN)
(72) Inventor: TANG, Yi, Sichuan 643201 (CN); YE, Feiyang, Sichuan 643201 (CN); LI, Hui, Sichuan 643201 (CN); ZHENG, Hongwei, Sichuan 643201 (CN); JIANG, Yuchao, Sichuan 643201 (CN); HUANG, Weibin, Sichuan 643201 (CN); LI, Gang, Sichuan 643201 (CN); ZHOU, Yuanzhen, Sichuan 643201 (CN)
(74) Representative: TBK
(86) International application number: PCT/CN2021/121202
(87) International publication number: WO 2022/257300

(57) **Abstract**

The present invention relates to the technical field of fluorine-containing polymers, in particular to a polyether diacid or polyether diacid salt surfactant, and the use thereof. The polyether diacid or polyether diacid salt surfactant has a general structural formula as follows: *X-L*-(*O*-*CH*₂*CHZ*)ₐ-(O-*CR*¹*R*²*CR*³*R*⁴)_{b}-*O*-*L-X,* wherein Z represents H or CH₃; L represents a C₁-C₅ alkylene group; X represents -COOM or -SO₃M, and M represents H⁺, NH₄⁺ or Na⁺; R¹-R⁴ each independently represents an H atom, an F atom, a non-fluorinated alkyl or alkoxy group, a partially fluorinated alkyl or alkoxy group, and a fully fluorinated alkyl or alkoxy group; and a and b each independently represents a positive integer from 0 to 10. The polyether diacid or polyether diacid salt surfactant provided in the present invention can significantly reduce the surface tension of a polymerization system, can improve the stability of an aqueous dispersion of a fluorine-containing polymer, and can also significantly reduce the usage amount of a fluorine-containing surfactant.

## Description

### Cross-reference to related application

The present application claims priority to Chinese Patent Application No. 202110653981.X, entitled "Polyether diacid or polyether diacid salt surfactant, and use thereof, and filed on June 11, 2021, the entire disclosure of which is incorporated herein by reference in its entirety.

### Technical Field

The present application relates to the technical field of fluorine-containing polymers, and in particular to a polyether diacid or polyether diacid salt surfactant and use thereof.

### Background Art

The fluorine-containing surfactant has superior properties among numerous surfactants, wherein perfluorooctanoic acid (PFOA) and its salts (such as ammonium salt and sodium salt) are the most widely used species of fluorine-containing surfactants; and the important use thereof is as an auxiliary agent in the manufacture of fluorine-containing functional polymer materials. In recent years, while PFOA has been widely used, the problem of its potential impact on the environment and health has been gradually exposed, and its production and use have also been increasingly restricted.

In terms of molecular structure, the fluorine-containing surfactant used to replace PFOA should not only have an excellent surface property to be able to meet the requirements of hydrophobic, oil-repellent and high surface activity, but also have the characteristics of low toxicity and easy-to-degrade that meet the requirements of environmental protection and health. At present, the technical routes for the development of PFOA alternatives at home and abroad are mainly divided into two categories: one is to develop surfactants containing short-chain or branched-chain fluorocarbon; the other is to introduce ether bonds and methylene or similar groups into fluorocarbon chains.

CN101535352A adopts a fluorine-containing polyether acid or its salt with a number average molecular mass of at least 800 g/mol as the main emulsifier, and uses a compound or siloxane surfactant having a structure of [R₁-Oₙ-L-A-]⁻Y⁺ (wherein R₁ is a partially fluorinated or fully fluorinated straight or branched aliphatic group that can contain an ether bond; n is 0 or 1; L is a non-fluorinated, partially fluorinated or fully fluorinated straight or branched alkylene group that may contain ether bond; A- is an anion such as carboxylate, sulfonate, sulfonamide or phosphonate; Y⁺ is hydrogen, ammonium or an alkali metal cation; and the chain length of R₁-Oₙ-L- is not more than 6 atoms) as the auxiliary emulsifier to obtain an aqueous dispersion of a fluorine-containing polymer with good performance, and the amount of the fluorine-containing emulsifier is less than 0.03% (parts by mass) of the amount of the aqueous dispersion.

CN101223228A discloses the use of a non-ionic, non-fluorinated emulsifier to prepare an aqueous dispersion of a fluorine-containing polymer. The emulsifier used is an emulsifier containing polyethylene glycol and/or polypropylene glycol fragments with 3 to 100 repeating units. In terms of structure, the emulsifier can contain the same or different end groups at each end, such as hydroxyl, carboxylate, benzoate, acrylate, methacrylate, ether, hydrocarbon, phenol, functionalized phenol, ester, fatty acid esters.

In view of this, the present application is hereby proposed.

### Summary

The present application provides a polyether diacid or polyether diacid salt surfactant, the surfactant is safe, environmentally friendly, easy to degrade, and can replace part of the fluorine-containing surfactant in the application in fluorine-containing polymers. Another aspect of the present application is to provide the use of the above-mentioned polyether diacid or polyether diacid salt surfactant.

Specifically, the present application provides the following technical solutions:
The present application provides a polyether diacid or polyether diacid salt surfactant, having a general structure formula as follows:

*X-L-*(*O-CH₂CHZ*)ₐ*-*(*O-CR*¹*R*²*CR*³*R*⁴)_{b}*-O-L-X*;

wherein Z represents H or CH₃; L represents a C₁-C₅ alkylene group; X represents - COOM or -SO₃M, and M represents H⁺, NH₄⁺ or Na⁺; R¹-R⁴ each independently represents an H atom, an F atom, a non-fluorinated alkyl or alkoxy group, a partially fluorinated alkyl or alkoxy group, and a fully fluorinated alkyl or alkoxy group; and a and b each independently represents a positive integer from 0 to 10.

The present application unexpectedly finds that the above-mentioned polyether diacid or polyether diacid salt surfactant can significantly reduce the surface tension of a polymerization system, improve the stability of an aqueous dispersion of a fluorine-containing polymer, and also significantly reduce the usage amount of a fluorine-containing surfactant.

In the present application, the polyether chain segment of the polyether diacid or polyether diacid salt surfactant has any chain structure, wherein the oxygen atom in the main chain of the molecule is separated by a saturated hydrocarbon radical with 2 carbon atoms; in the structural formula of polyether diacid or polyether diacid salt surfactant, there may be more than one fluoroalkyl group; and the representative structure has the following repeating units:

-CH₂-CH₂-O- (2)

-CH₂-CF₂-O- (3)

-CF₂-CF₂-O- (4)

-CH₂-CCH₃-O- (5)

-CF₂-CCF₃-O- (6)

-CH₂-CH(OCH₃)-O- (7)

-CH₂-CH(CH₂OH)-O- (8).

The two end groups X of the polyether diacid or polyether diacid salt surfactant provided by the present application are carboxylic acid groups or sulfonic acid groups, wherein the carboxylic acid group and sulfonic acid group can exist in the form of acid or salt thereof; and the polyether diacid or polyether diacid salt surfactant has at least 2 ether oxygens, more preferably at least 4 ether oxygens, and even more preferably at least 6 ether oxygens.

Preferably, Z represents H; L represents a C₂ alkylene group; X represents -COOM and M represents NH₄⁺; R¹-R⁴ each independently represents an H atom; and a and b each independently represents a positive integer from 1 to 5.

Further, the polyether diacid or salt surfactant thereof is one or two selected from the following structural formulas:

*NH*⁴*OOC-CH*₂*CH*₂*-*(*O-CH*₂*CH*₂)₃*-O-CH*₂*CH*₂*-COONH*⁴

*NH*⁴*OOC-CH*₂*CH*₂*-*(*O-CH*₂*CH*₂)₅*-O-CH*₂*CH*₂*-COONH*⁴

The present application also provides the use of the polyether diacid or polyether diacid salt surfactant in the preparation of fluorine-containing polymers; preferably the use is a use in the preparation of an aqueous dispersion of fluorine-containing polymers.

The present application also provides a dispersant, comprising polyether diacid or polyether diacid salt surfactant and a fluorine-containing surfactant.

The fluorine-containing polymer can be easily separated from the aqueous dispersion by taking the polyether diacid or polyether diacid salt surfactant provided by the present application as the dispersant,

Preferably, the fluorine-containing surfactant has a general structural formula as follows:

*R*_{f}-*O*-*CZ*₁*Z*₂*CZ*₃*Z*₄*-X*;

wherein, R_{f} represents a C₁-C₅ perfluoroalkyl or alkoxy group, and Z₁~Z₄ represents an H atom or F atom; X represents -COOM or -SO₃M, and M represents H⁺, NH₄⁺ or Na⁺.

In the present application, the fluorine-containing surfactant is particularly suitable for use in conjunction with the polyether diacid or polyether diacid salt surfactant of the present application.

Further, the fluorine-containing surfactant is one or more selected from the following structural formulas:

CF₃-O-CF(CF₃)CF₂-O-CH₂CH₂COOM

CF₃OCF₂OCF₂CF₂-O-CH₂CH₂COOM

CF₃-OCF(CF₃)CF₂-O-CH₂CH₂SO₃M

CF₃OCF₂OCF₂CF₂-O-CH₂CH₂SO₃M;

wherein, M represents H⁺ or NH₄⁺.

Further, the fluorine-containing surfactant has a structural formula as follows:

CF₃-OCF(CF₃)-CF₂-O-CH₂CH₂COONH₄.

Preferably, the amount of the fluorine-containing surfactant is 5% to 50%, preferably 10% to 30%, based on the total mass of the dispersant.

In the present application, when the mass ratio of polyether diacid or polyether diacid salt surfactant and a fluorine-containing surfactant is within the above range, the surface tension of the mixture of the two components dissolved in water at a concentration of 2000 ppm is at least 20% lower than that using the same concentration of fluorine-containing surfactant alone.

The present application also provides a method for preparing an aqueous dispersion of fluorine-containing polymers comprising using the above-mentioned dispersant as a dispersant, and polymerizing at least one fluorine-containing monomer in an aqueous dispersion system.

Preferably, the fluorine-containing monomer is one or more selected from tetrafluoroethylene (TFE), vinylidene fluoride (VDF), and chlorotrifluoroethylene (CTFE).

In the present application, the fluorine-containing polymer obtained by polymerization also includes comonomer, which is one or more selected from hexafluoropropylene (HFP), perfluoroalkylethylene monomer, and fluorovinyl ether; wherein, the perfluoroalkylethylene monomer is one or more selected from tetrafluoroethylene (TFE), hexafluoropropylene (HFP), and vinylidene difluoride (VDF); and the fluorovinyl ether is perfluoroalkyl vinyl ether (PAVE), such as perfluoropropyl vinyl ether (PPVE), perfluoroethyl vinyl ether (PEVE), and perfluoromethyl vinyl ether (PMVE).

In specific embodiments, the comonomers are tetrafluoroethylene and perfluoropropylene, tetrafluoroethylene and perfluoroalkoxy vinyl ether, tetrafluoroethylene and perfluoropropylene and vinylidene fluoride, vinylidene fluoride and perfluoropropylene, vinylidene fluoride and tetrafluoroethylene.

Preferably, the amount of the dispersant in water is 10 to 10000 ppm; preferably from 50 to 5000 ppm; more preferably 200 to 1500 ppm.

In the above technical solution, the water refers to water for polymerization.

Preferably, the aqueous dispersion of fluorine-containing polymers is an aqueous dispersion of polytetrafluoroethylene, an aqueous dispersion of polychlorotrifluoroethylene or an aqueous dispersion of polyvinylidene fluoride.

Specifically, the above preparation method can be used to prepare homopolytetrafluoroethylene (PTFE) and modified PTFE dispersion. The homopolytetrafluoroethylene and modified PTFE dispersion usually have a melting viscosity of at least 1×10⁸ Pa·s. At such a high melting viscosity, the flow of polymer in the molten state is not significant, and cannot be processed and molded by a melt processing method. Homopolytetrafluoroethylene refers to a high-molecular polymer obtained by polymerization of high-purity tetrafluoroethylene monomers, without significant comonomers. Modified PTFE refers to the copolymer obtained by copolymerization of TFE with a low concentration of second monomers, and the melting point of the obtained polymer is not significantly lower than that of PTFE. The concentration of such comonomers are preferably less than 1 wt%, more preferably less than 0.5 wt%, and a minimum amount of at least about 0.05 wt% is preferably used to obtain a significant modification effect. The modified PTFE containing a small amount of comonomers has better film-forming properties during the sintering process. Suitable copolymerization-modified monomers include fluorine-containing olefins and fluorine-containing vinyl ethers, such as perfluoropropylene (HFP) or perfluoroalkyl vinyl ether (PAVE), preferably perfluoroethyl vinyl ether (PEVE) and perfluoropropyl vinyl ether (PPVE). Monomers such as chlorotrifluoroethylene (CTFE) and perfluorobutylethylene (PFBE) can also be used for modification.

The above preparation method can also be used to prepare melt-processible non-elastomeric fluorine-containing polymer dispersion. Examples of such melt-processible non-elastomeric fluorine-containing polymer include polychlorotrifluoroethylene (PCTFE), or a copolymer of tetrafluoroethylene (TFE) and at least one fluorinated copolymerizable monomer (comonomer). The fluorinated copolymerizable monomer is present in the polymer in a sufficient amount such that the melting point of the copolymer is significantly lower than that of homopolytetrafluoroethylene (PTFE), for example, the melting point is reduced to a melting temperature not greater than 315°C.

The preferred melt-processible non-elastomeric copolymers prepared by the method of the present application comprise at least about 40 to 99 mol% of a tetrafluoroethylene unit and about 1 to 60 mol% of at least one other monomer. The preferred comonomers containing TFE are perfluoroolefins with 3 to 8 carbon atoms, such as hexafluoropropylene (HFP) and perfluoroalkyl vinyl ether (PAVE).

The fluorine-containing polymer prepared by the method of the present application comprises at least one polymerization unit of fluorine-containing monomer; preferably, comprises at least one copolymerization unit of fluorine-containing monomer and a second copolymerization unit of different monomer. Fluorine-containing monomers include but are not limited to fluorine-containing olefin and fluorine-containing vinyl ether.

The preparation method of the present application can also be used for the synthesis of polyvinylidene fluoride (PVDF) and vinylidene fluoride copolymer, as well as the synthesis of polyvinyl fluoride (PVF) and vinyl fluoride copolymer.

The present application also provides an aqueous dispersion of a fluorine-containing polymer, which is prepared by the above method.

The present application has the following beneficial effects:
The polyether diacid or polyether diacid salt surfactant provided in the present application can significantly reduce the surface tension of a polymerization system, improve the stability of an aqueous dispersion of a fluorine-containing polymer, and also significantly reduce the usage amount of a fluorine-containing surfactant.

### Specific Modes for Carrying Out the Embodiments

The following examples are used to illustrate the present application but are not intended to limit the scope of the present application.

In the examples, unless otherwise specified, the test means and equipment used are all those without specific techniques or conditions specified in the conventional examples in the art, and are carried out according to the techniques or conditions described in the literature in the art, or according to the product instructions. The reagents or instruments used without specific manufacturers are conventional products that can be purchased through conventional channels.

The example of the present application is carried out in a vertical or horizontal reactor with an agitator, and the polymerization method is intermittent mode. Deionized water is used as the dispersion medium for polymerization. Under the action of stirring, the TFE in gas phase enters the aqueous phase, and fully contacts with the free radical initiator in water to initiate the polymerization reaction under the action of stirring and dispersant. In order to ensure the polymerization rate, it is necessary to ensure the monomer pressure in the reactor, and at the same time supplement the monomer after the start of the reaction to maintain the pressure stability in the polymerization reactor. The reactor also includes a cooling jacket surrounding the reactor to control the polymerization reaction temperature by removing the polymerization reaction heat through cooling water.

In the typical polymerization method of PTFE homopolymer and modified PTFE, deionized water was first added to the reactor as the polymerization medium, and paraffin was added as the stabilizer. The reactor was sealed, and the oxygen in the reactor was replaced with nitrogen such that the oxygen content is less than 30 ppm. Part or all of the dispersant was added and dispersed in deionized water. The agitator was started, and the deionized water in the reactor was heated to the polymerization temperature. Part or all of the comonomer (such as HFP or perfluoroalkyl vinyl ether) was added, and then TFE was added to pressurize the reactor to polymerization pressure. Free radical initiator solution, such as ammonium persulfate solution, was added. For PTFE homopolymer and modified PTFE, succinic acid is used to reduce coagulation. A redox initiator system such as ammonium persulfate/sodium bisulfite can also be used, and a lower polymerization temperature can be used at this time. After polymerization started, TFE was continuously added to maintain the stability of polymerization pressure. In different stages of polymerization, comonomers, chain transfer agents, part of auxiliary agents such as surfactants, and part of initiators can be added according to the requirements of product performance.

When the amount of input monomer reaches the predetermined value, the addition of TFE was stopped, and stirring operation was stopped at the same time, the unpolymerized monomer in the reactor was recovered, and the reactor was purged and replaced with nitrogen, and then emptied. The obtained aqueous dispersion of a fluorine-containing polymer was transferred to a storage tank for subsequent processing. The aqueous dispersion of a fluorine-containing polymer prepared by the method of the present application preferably has a solid content of at least about 10 wt%, more preferably at least about 20 wt%. The preferred range of the solid content of the fluorine-containing polymer prepared by the method of the present application is about 20 wt% to about 40 wt%, more preferably about 25 wt% to about 35 wt%.

In the preferred method of the present application, the total weight of the undispersed fluorine-containing polymer (coagulum) produced during the polymerization process is less than 5 wt% of the stabilized fluorine-containing polymer dispersed in water, more preferably less than 1 wt%, and most preferably less than 0.5 wt%.

The aqueous dispersion of a fluorine-containing polymer obtained by the polymerization of the present application can obtain a fine powder with an average particle size of about 500 µM by the method of demulsification and coagulation, and can obtain fluorine-containing dispersion resin products used in the fields of producing films, fibers, extruded tubes and the like through technological processes such as washing and drying.

The aqueous dispersion of a fluorine-containing polymer obtained by the polymerization of the present application can also be directly sold in the form of aqueous dispersion. Generally, the initial aqueous dispersion obtained by polymerization needs to be concentrated and a non-ionic surfactant needs to be added to stabilize the aqueous dispersion before concentration, and then chemical concentration or vacuum concentration is carried out. The solid content of the concentrated aqueous dispersion of a fluorine-containing polymer is usually about 35 wt% to about 65 wt%.

A similar polymerization process is used for melt-processible fluorine-containing copolymers, which use a large amount of comonomers different from homopolymerized and modified PTFE. The comonomer can be added to the reactor in batches during the polymerization process, or it can be continuously added to the reactor after mixing evenly with the TFE monomer. In order to increase the melting flow rate of melt-processible fluorine-containing copolymers, usually a chain transfer agent is used to control the molecular weight of the copolymer. The same operation for concentrating aqueous dispersion of a fluorine-containing polymer can be used to prepare a stable concentrated aqueous dispersion of a fluorine-containing polymer. The melt-processible fluorine-containing copolymer can also be processed into granules or flakes through processes such as coagulation, washing, and drying.

### Example 1

30 kg of deionized water, 1000 g of paraffin, 8 g of *NH*⁴*OOC-CH*₂*CH*₂*-*(*O-CH*₂*CH*₂)₃*-O-CH*₂*CH*₂*-COONH*⁴ (surfactant A), and 2 g of CF₃-OCF(CF₃)-CF₂-O-CH₂CH₂COONH₄ (fluorine-containing surfactant B) were added to a 50 L stainless steel reactor with stirring paddle, the reactor was sealed, the resulted system was replaced with nitrogen for three times, and replaced with TFE gas for two times, so that the oxygen content in the reactor was less than 30 ppm. The reactor was heated up, and TFE was added when the temperature reached 80°C such that the pressure in the reactor reached 2.0 MPa. Ammonium persulfate solution (aqueous solution obtained by dissolving 60 mg ammonium persulfate in 100 ml deionized water) was added through a metering pump, and stirred at a speed of 100 rpm. TFE was continuously added to maintain the internal pressure of the reactor at 2.0±0.05 MPa after the polymerization reaction was started. The polymerization heat was removed by injecting cooling water into the reactor jacket to maintain the stability of the polymerization temperature in the reactor. When the added TFE reached 1.6 kg, 150 g of mixed aqueous solution of surfactant A and fluorine-containing surfactant B (surfactant weight ratio 4:1, content 20 wt%) were added through a metering pump. When the consumption of TFE reached 13 kg, the addition of monomers and stirring were stopped, unreacted monomers in the reactor was recovered to slightly positive pressure, the reactor was emptied to terminate the polymerization reaction, and the aqueous dispersion A of PTFE was obtained. The polymer concentration was 29.9 wt%, and the primary particle size in the aqueous dispersion was 0.23 µm.

Saturated aqueous ammonium bicarbonate solution was used to coagulate the obtained aqueous dispersion. The polymer was washed several times with warm water and filtered to obtain polymer powder with an average particle size of 506 µm. 12.85 kg of white polymer was obtained after drying in an oven at 180°C for 24 h. The standard specific gravity of the polymer was 2.173 through the standard specific gravity test.

### Example 2

30 kg of deionized water, 1000 g of paraffin, 4 g of *NH*⁴*OOC-CH*₂*CH*₂*-*(*O-CH*₂*CH*₂)₃*-O-CH*₂*CH*₂-*COONH*⁴ (surfactant A), and 1 g of CF₃-OCF(CF₃)-CF₂-O-CH₂CH₂COONH₄ (surfactant B) were added to a 50 L stainless steel reactor with stirring paddle, the reactor was sealed, the resulted system was replaced with nitrogen for three times, and replaced with TFE gas for two times, so that the oxygen content in the reactor was less than 30 ppm. The reactor was heated up and TFE was added when the temperature reached 80°C such that the pressure in the reactor reached 2.0 MPa. Ammonium persulfate solution (aqueous solution obtained by dissolving 60 mg of ammonium persulfate in 100 ml of deionized water) was added through a metering pump, and stirred at a speed of 100 rpm. TFE was continuously added to maintain the internal pressure of the reactor at 2.0±0.05 MPa after the polymerization reaction was started. The polymerization heat was removed by injecting cooling water into the reactor jacket to maintain the stability of the polymerization temperature in the reactor. When the added TFE reached 1.6 kg, 75 g of mixed aqueous solution of surfactant A and fluorine-containing surfactant B (surfactant weight ratio 4:1, content 20 wt%) were added through a metering pump. When the consumption of TFE reached 13 kg, the addition of monomers and stirring were stopped, unreacted monomers in the reactor was recovered to slightly positive pressure, the reactor was emptied to terminate the polymerization reaction, and the aqueous dispersion A of PTFE was obtained. The polymer concentration was 29.6 wt% and the primary particle size in the aqueous dispersion was 0.26 µm.

Saturated aqueous ammonium bicarbonate solution was used to coagulate the obtained aqueous dispersion. The polymer was washed several times with warm water and filtered to obtain polymer powder with an average particle size of 557 µm. 12.72 kg of white polymer was obtained after drying in an oven at 180°C for 24 h. The standard specific gravity of the polymer was 2.172 through the standard specific gravity test.

### Example 3

30 kg of deionized water, 1000 g of paraffin, 4 g of *NH*⁴*OOC-CH*₂*CH*₂*-*(*O-CH*₂*CH*₂)₅*-O-CH*₂*CH*₂-*COONH*⁴ (surfactant A), and 1 g of CF₃-OCF(CF₃)-CF₂-O-CH₂CH₂COONH₄ (surfactant B) were added to a 50 L stainless steel reactor with stirring paddle, the reactor was sealed, the resulted system was replaced with nitrogen for three times, and replaced with TFE gas for two times, so that the oxygen content in the reactor was less than 30 ppm. The reactor was heated up and TFE was added when the temperature reached 80°C such that the pressure in the reactor reached 2.0 MPa. Ammonium persulfate solution (aqueous solution obtained by dissolving 60 mg ammonium persulfate in 100 ml deionized water) was added through a metering pump, and stirred at a speed of 100 rpm. TFE was continuously added to maintain the internal pressure of the reactor at 2.0±0.05 MPa after the polymerization reaction was started. The polymerization heat was removed by injecting cooling water into the reactor jacket to maintain the stability of the polymerization temperature in the reactor. When the added TFE reached 1.6 kg, 75 g of mixed aqueous solution of surfactant A and fluorine-containing surfactant B (surfactant weight ratio 4: 1, content 20 wt%) were added through a metering pump. When the consumption of TFE reached 13 kg, the addition of monomers and stirring were stopped, unreacted monomers in the reactor was recovered to slightly positive pressure, the reactor was emptied to terminate the polymerization reaction, and the aqueous dispersion A of PTFE was obtained. The polymer concentration was 29.7 wt% and the primary particle size in the aqueous dispersion was 0.25 µm.

Saturated aqueous ammonium bicarbonate solution was used to coagulate the obtained aqueous dispersion. The polymer was washed several times with warm water and filtered to obtain polymer powder with an average particle size of 536 µm. 12.75 kg of white polymer was obtained after drying in an oven at 180°C for 24 h. The standard specific gravity of the polymer was 2.170 through the standard specific gravity test.

### Example 4

30 kg of deionized water, 1000 g of paraffin, 4 g of *NH*⁴*OOC-CH*₂*CH*₂*-*(*O-CH*₂*CH*₂)₅*-O-CH*₂*CH*₂*-COONH*⁴ (surfactant A), and 1 g of CF₃-OCF(CF₃)-CF₂-O-CH₂CH₂COONH₄ (surfactant B) were added to a 50 L stainless steel reactor with stirring paddle, the reactor was sealed, the resulted system was replaced with nitrogen for three times, and replaced with TFE gas for two times, so that the oxygen content in the reactor was less than 30 ppm. 8 g of perfluoropropylene was added, and the reactor was heated up, TFE was added when the temperature reached 80°C such that the pressure in the reactor reached 2.0 MPa. Ammonium persulfate solution (aqueous solution obtained by dissolving 80 mg ammonium persulfate in 100 ml deionized water) was added through a metering pump, and stirred at a speed of 80 rpm. TFE was continuously added to maintain the internal pressure of the reactor at 2.0±0.05 MPa after the polymerization reaction was started. The polymerization heat was removed by injecting cooling water into the reactor jacket to maintain the stability of the polymerization temperature in the reactor. When the added TFE reached 1.6 kg, 75 g of mixed aqueous solution of 20 wt% surfactant A and fluorine-containing surfactant B (surfactant weight ratio 4:1) were added through a metering pump. When the consumption of TFE reached 13 kg, the addition of monomers and stirring were stopped, unreacted monomers in the reactor was recovered to slightly positive pressure, the reactor was emptied to terminate the polymerization reaction, and the aqueous dispersion A of PTFE was obtained. The polymer concentration was 29.9 wt% and the primary particle size in the aqueous dispersion was 0.25 µm.

Saturated aqueous ammonium bicarbonate solution was used to coagulate the obtained aqueous dispersion. The polymer was washed several times with warm water and filtered to obtain polymer powder with an average particle size of 533 µm. 12.83 kg of white polymer was obtained after drying in an oven at 180°C for 24 h. The standard specific gravity of the polymer was 2.176, and the extrusion pressure was 23.3 MPa through the standard specific gravity test.

### Example 5

30 kg of deionized water, 1000 g of paraffin, 4 g of *NH*⁴*OOC-CH*₂*CH*₂*-*(*O-CH*₂*CH*₂)₅*-O-CH*₂*CH*₂*-COONH*⁴ (surfactant A), and 1 g of CF₃-OCF(CF₃)-CF₂-O-CH₂CH₂COONH₄ (fluorine-containing surfactant B) were added to a 50 L stainless steel reactor with stirring paddle, the reactor was sealed, the resulted system was replaced with nitrogen for three times, and replaced with TFE gas for two times, so that the oxygen content in the reactor was less than 30 ppm. 6 g of perfluoropropyl vinyl ether (PPVE) was added, and the reactor was heated up, TFE was added when the temperature reached 80°C such that the pressure in the reactor reached 2.0 MPa. Ammonium persulfate solution (aqueous solution obtained by dissolving 80 mg ammonium persulfate in 100 ml deionized water) was added through a metering pump, and stirred at a speed of 80 rpm. TFE was continuously added to maintain the internal pressure of the reactor at 2.0±0.05 MPa after the polymerization reaction was started. The polymerization heat was removed by injecting cooling water into the reactor jacket to maintain the stability of the polymerization temperature in the reactor. When the added TFE reached 1.6 kg, 75 g of mixed aqueous solution of 20 wt% surfactant A and fluorine-containing surfactant B (surfactant weight ratio 4:1) were added through a metering pump. When the consumption of TFE reached 13 kg, the addition of monomers and stirring were stopped, unreacted monomers in the reactor was recovered to slightly positive pressure, the reactor was emptied to terminate the polymerization reaction, and the aqueous dispersion A of PTFE was obtained. The polymer concentration was 29.8 wt% and the primary particle size in the aqueous dispersion was 0.24 µm.

Saturated aqueous ammonium bicarbonate solution was used to coagulate the obtained aqueous dispersion. The polymer was washed several times with warm water and filtered to obtain polymer powder with an average particle size of 566 µm. 12.81 kg of white polymer was obtained after drying in an oven at 180°C for 24 h. The standard specific gravity of the polymer was 2.160, and the extrusion pressure was 24.1 MPa through the standard specific gravity test.

### Comparative example 1

30 kg of deionized water, 1000 g paraffin, and 10 g of CF₃-OCF(CF₃)-CF₂-O-CH₂CH₂COONH₄ were added to a 50 L stainless steel reactor with a stirring paddle, the reactor was sealed, the resulted system was replaced with nitrogen for three times, and replaced with TFE gas for two times, so that the oxygen content in the reactor was less than 30 ppm. The reactor was heated up and TFE was added when the temperature reached 80°C such that the pressure in the reactor reached 2.0 MPa. Ammonium persulfate solution (aqueous solution obtained by dissolving 60 mg ammonium persulfate in 100 ml deionized water) was added through a metering pump, and stirred at a speed of 100 rpm. TFE was continuously added to maintain the internal pressure of the reactor at 2.0±0.05 MPa after the polymerization reaction was started. The polymerization heat was removed by injecting cooling water into the reactor jacket to maintain the stability of the polymerization temperature in the reactor. When the added TFE reached 1.6 kg, 150 g of aqueous solution of 20 wt% ammonium perfluorooctanoate were added through a metering pump. When the consumption of TFE reaches 13 kg, the addition of monomers and stirring were stopped, unreacted monomers in the reactor was recovered to slightly positive pressure, the reactor was emptied to terminate the polymerization reaction, and the aqueous dispersion A of PTFE was obtained. The polymer concentration was 29.7 wt% and the primary particle size in the aqueous dispersion was 0.25 µm.

Saturated aqueous ammonium bicarbonate solution was used to coagulate the obtained aqueous dispersion. The polymer was washed several times with warm water and filtered to obtain polymer powder with an average particle size of 535 µm. 12.75 kg of white polymer was obtained after drying in an oven at 180°C for 24 h. The standard specific gravity of the polymer was 2.169 through the standard specific gravity test.

### Comparative example 2

30 kg of deionized water, 1000 g of paraffin, and 10 g of CF₃-OCF(CF₃)-CF₂-O-CH₂CH₂COONH₄ were added to a 50 L stainless steel reactor with a stirring paddle, the reactor was sealed, the resulted system was replaced with nitrogen for three times, and replaced with TFE gas for two times, so that the oxygen content in the reactor was less than 30 ppm. 8 g of perfluoropropylene was added, and the reactor was heated up, TFE was added when the temperature reached 80°C such that the pressure in the reactor reached 2.0 MPa. Ammonium persulfate solution (aqueous solution obtained by dissolving 80 mg ammonium persulfate in 100 ml deionized water) was added through a metering pump, and stirred at a speed of 80 rpm. TFE was continuously added to maintain the internal pressure of the reactor at 2.0±0.05 MPa after the polymerization reaction was started. The polymerization heat was removed by injecting cooling water into the reactor jacket to maintain the stability of the polymerization temperature in the reactor. When the added TFE reached 1.6 kg, 150 g of aqueous solution of 20 wt% ammonium perfluorooctanoate was added through a metering pump. When the consumption of TFE reached 13 kg, the addition of monomers and stirring were stopped, unreacted monomers in the reactor was recovered to slightly positive pressure, the reactor was emptied to terminate the polymerization reaction, and the aqueous dispersion A of PTFE was obtained. The polymer concentration was 30.0 wt% and the primary particle size in the aqueous dispersion was 0.23 µm.

Saturated aqueous ammonium bicarbonate solution was used to coagulate the obtained aqueous dispersion. The polymer was washed several times with warm water and filtered to obtain polymer powder with an average particle size of 546 µm. 12.85 kg of white polymer was obtained after drying in an oven at 180°C for 24 h. The standard specific gravity of the polymer was 2.175, and the extrusion pressure was 23.5 MPa through the standard specific gravity test.

### Comparative example 3

30 kg of deionized water, 1000 g of paraffin, and 10 g of CF₃-OCF(CF₃)-CF₂-O-CH₂CH₂COONH₄ were added to a 50 L stainless steel reactor with a stirring paddle, the reactor was sealed, the resulted system was replaced with nitrogen for three times, and replaced with TFE gas for two times, so that the oxygen content in the reactor was less than 30 ppm. 6.0 g of perfluoropropyl vinyl ether (PPVE) was added, and the reactor was heated up, TFE was added when the temperature reached 80°C such that the pressure in the reactor reached 2.0 MPa. Ammonium persulfate solution (aqueous solution obtained by dissolving 80 mg ammonium persulfate in 100 ml deionized water) was added through a metering pump, and stirred at a speed of 80 rpm. TFE was continuously added to maintain the internal pressure of the reactor at 2.0±0.05 MPa after the polymerization reaction was started. The polymerization heat was removed by injecting cooling water into the reactor jacket to maintain the stability of the polymerization temperature in the reactor. When the added TFE reached 1.6 kg, 150 g of aqueous solution of 20 wt% ammonium perfluorooctanoate was added through a metering pump. When the consumption of TFE reached 13 kg, the addition of monomers and stirring were stopped, unreacted monomers in the reactor was recovered to slightly positive pressure, the reactor was emptied to terminate the polymerization reaction, and the aqueous dispersion A of PTFE was obtained. The polymer concentration was 29.9 wt% and the primary particle size in the aqueous dispersion was 0.25 µm.

Saturated aqueous ammonium bicarbonate solution was used to coagulate the obtained aqueous dispersion. The polymer was washed several times with warm water and filtered to obtain polymer powder with an average particle size of 527 µm. 12.8 kg of white polymer was obtained after drying in an oven at 180°C for 24 h. The standard specific gravity of the polymer was 2.157, and the extrusion pressure was 25.2 MPa through the standard specific gravity test.

Although the present application has been described in detail above with general descriptions, specific embodiments, and tests, it is obvious to those skilled in the art that some modifications or improvements can be made on the basis of the present application. Therefore, these modifications or improvements made without departing from the spirit of the present application fall within the scope of protection claimed by the present application.

### Industrial applicability

The present application provides a polyether diacid or polyether diacid salt surfactant, and the use thereof. The polyether diacid or polyether diacid salt surfactant has a general structural formula as follows: *X*-*L*-*(O*-*CH*₂*CHZ*)ₐ-(O-*CR*¹*R*²*CR*³*R*⁴)_{b}-*O*-*L-X,* wherein Z represents H or CH₃; L represents a C₁-C₅ alkylene group; X represents -COOM or -SO₃M, and M represents H⁺, NH₄⁺ or Na⁺; R¹-R⁴ each independently represents an H atom, an F atom, a non-fluorinated alkyl or alkoxy group, a partially fluorinated alkyl or alkoxy group, and a fully fluorinated alkyl or alkoxy group; and a and b each independently represents a positive integer from 0 to 10. The polyether diacid or polyether diacid salt surfactant provided in the present application can significantly reduce the surface tension of a polymerization system, can improve the stability of an aqueous dispersion of a fluorine-containing polymer, can also significantly reduce the usage amount of a fluorine-containing surfactant, and has good economic value and application prospects.

## Claims

1. A polyether diacid or polyether diacid salt surfactant, **characterized by** having a general structural formula as follows:
*X-L-*(*O-CH*₂*CHZ*)ₐ*-*(*O-CR*¹*R*²*CR*³*R*⁴)_{b}*-O-L-X*;
wherein Z represents H or CH₃; L represents a C₁-C₅ alkylene group; X represents - COOM or -SO₃M, and M represents H⁺, NH₄⁺ or Na⁺; R¹-R⁴ each independently represents an H atom, an F atom, a non-fluorinated alkyl or alkoxy group, a partially fluorinated alkyl or alkoxy group, and a fully fluorinated alkyl or alkoxy group; and a and b each independently represents a positive integer from 0 to 10.

2. The polyether diacid or polyether diacid salt surfactant of claim 1, wherein, Z represents H; L represents a C₂ alkylene group; X represents -COOM and M represents NH₄⁺; R¹-R⁴ each independently represents an H atom; and a and b each independently represents a positive integer from 1 to 5.

3. The polyether diacid or polyether diacid salt surfactant of claim 2, wherein, the polyether diacid or polyether diacid salt surfactant is one or two selected from the following structural formulas:
*NH*⁴*OOC*-*CH*₂*CH*₂-(*O*-*CH*₂*CH*₂)₃-*O*-*CH*₂*CH*₂*-COONH*⁴
*NH*⁴*OOC-CH*₂*CH*₂*-*(*O-CH*₂*CH*₂)₅*-O-CH*₂*CH*₂*-COONH*⁴

4. Use of the polyether diacid or polyether diacid salt surfactant of any one of claims 1 to 3 in the preparation of a fluorine-containing polymer; preferably the use is a use in the preparation of an aqueous dispersion of a fluorine-containing polymer.

5. A dispersant, **characterized by** comprising polyether diacid or polyether diacid salt surfactant of any one of claims 1-3 and a fluorine-containing surfactant;
preferably, the fluorine-containing surfactant has a general structural formula as follows:
*R*_{f}-*O*-*CZ*₁*Z*₂*CZ*₃*Z*₄*-X*;
wherein, R_{f} represents a C₁-C₅ perfluoroalkyl or alkoxy group, and Z₁~Z₄ represents H atom or F atom; X represents -COOM or -SO₃M, and M represents H⁺, NH₄⁺ or Na⁺;
more preferably, the fluorine-containing surfactant is one or more selected from the following structural formulas:
CF₃-O-CF(CF₃)CF₂-O-CH₂CH₂COOM
CF₃OCF₂OCF₂CF₂-O-CH₂CH₂COOM
CF₃-OCF(CF₃)CF₂-O-CH₂CH₂SO₃M
CF₃OCF₂OCF₂CF₂-O-CH₂CH₂SO₃M;
wherein, M represents H⁺ or NH₄⁺;
most preferably, the fluorine-containing surfactant has a structural formula as follows:
CF₃-OCF(CF₃)-CF₂-O-CH₂CH₂COONH₄.

6. The dispersant of claim 5, wherein the amount of the fluorine-containing surfactant is 5% to 50%, preferably 10% to 30%, based on the total mass of the dispersant.

7. A method for preparing an aqueous dispersion of a fluorine-containing polymer, **characterized by** comprising using the dispersant of claim 5 or 6 as a dispersant, and polymerizing at least one fluorine-containing monomer in an aqueous dispersion system.

8. The preparation method of claim 7, wherein the amount of the dispersant in water is 10 to 10000 ppm; preferably 50 to 5000 ppm.

9. The preparation method of claim 7 or 8, wherein the aqueous dispersion of a fluorine-containing polymer is an aqueous dispersion of polytetrafluoroethylene, an aqueous dispersion of polychlorotrifluoroethylene or an aqueous dispersion of polyvinylidene fluoride.

10. An aqueous dispersion of a fluorine-containing polymer, wherein the aqueous dispersion of a fluorine-containing polymer is prepared by the method of any one of claims 7 to 9.
